# EUROPEAN PATENT APPLICATION

(11) **EP 4 387 031 A1**
(43) Date of publication of application: **19.06.2024**
(21) Application number: 23215788.3
(22) Date of filing: 12.12.2023
(51) Int. Cl.: H02J 1/10, H02J 7/00, B60L 58/22

(54) **ELECTRIC POWER SUPPLY SYSTEM, ESPECIALLY FOR A VEHICLE, AND METHOD FOR CONTROLLING AN ELECTRIC POWER SUPPLY SYSTEM**

(30) Priority: 12.12.2022 EP 22212874
(71) Applicant: Volvo Car Corporation, 405 31 Göteborg (SE)
(72) Inventor: ANTONSSON, Anders, 40531 Göteborg (SE)
(74) Representative: Maiwald GmbH

(57) **Abstract**

A method for controlling an electric power supply system (200) is described. The electric power supply system (200) may be an electric power supply system (200) for a vehicle configured to drive the vehicle. The electric power supply system (200) comprises a first energy storage unit (206) electrically connected to a first converter unit (210) and a second energy storage unit (208) electrically connected to a second converter unit (212). The first converter unit (210) is electrically connected to a load (220) via a first diode element (232). The second converter unit (212) is electrically connected to the same load (220) via a second diode element (234). The method comprises obtaining first data indicative of an imbalance between the first energy storage unit (206) and the second energy storage unit (208). Moreover, the method comprises providing an operational parameter for at least one of the first converter unit (210) and the second converter unit (212). Additionally or alternatively, an operational parameter for at least one of the first diode element (232) and the second diode element (234) is provided. Further additionally or alternatively, an operational parameter for the load (220) is provided. The operational parameter is based on the first data and acts against the imbalance. Moreover, a data processing apparatus, a computer program, a computer-readable storage medium, a use, an electric power supply system (200), and a vehicle are presented.

## Description

### TECHNICAL FIELD

The present disclosure relates to a method for controlling an electric power supply system, a data processing apparatus, a computer program, a computer-readable storage medium, a use, an electric power supply system, and a vehicle.

### BACKGROUND ART

Electric vehicles become increasingly prevalent worldwide and are poised to become one of the most common modes of transportation. Such vehicles have an electric power supply system configured to drive the vehicle. With this pivot in transportation technology, there exist increasing power demands on electric power supply systems, especially batteries or battery packs of electric vehicles. For batteries, particularly high voltage batteries, a good charge balance is important to avoid or delay any repair due to different charge state, load state, wear state, etc. and to prolong operation time until the entire batteries need a repair or maintenance.

Among others, the energy consumed by low voltage loads may cause imbalanced energy drainage on the batteries. Energy consumption estimations may be based on peak, average, usage frequency, usage duration, faulty loads, or other dynamic characteristics of the loads. However, at system design time, there may be unknown factors relating to dynamically added or subtracted energy consumption. Such energy consumption may cause a significant impact on charge balance among the batteries over time.

### SUMMARY

Hence, there may be a need to provide an improved electric power supply system , which facilitates balancing an energy level of a battery system caused by low voltage loads in real time.

The problem is at least partially solved or alleviated by the subject matter of the independent claims of the present disclosure, wherein further examples are incorporated in the dependent claims. It should be noted that the aspects of the disclosure described in the following apply to the electric power supply system, the method for controlling the electric power supply system, the data processing apparatus, the computer program, the computer-readable storage medium, the use, and the vehicle.

According to the present disclosure a method for controlling an electric power supply system is presented. The electric power supply system may be an electric power supply system for a vehicle configured to drive the vehicle. The electric power supply system comprises a first energy storage unit electrically connected to a first converter unit and a second energy storage unit electrically connected to a second converter unit. The first converter unit is electrically connected to a load via a first diode element. The second converter unit is electrically connected to the same load via a second diode element. The method comprises:
- obtaining first data indicative of an imbalance of one of the first energy storage unit and the second energy storage unit with respect to the respective other one of the first energy storage unit and the second energy storage unit,
- providing an operational parameter for at least one of the first converter unit and the second converter unit based on the first data, wherein the operational parameter acts against the imbalance and/or
   providing an operational parameter for at least one of the first diode element and the second diode element based on the first data, wherein the operational parameter acts against the imbalance and/or
   providing an operational parameter for the load based on the first data, wherein the operational parameter acts against the imbalance.

The imbalance may be actual or expected. Thus, in an electric power supply system that may be controlled by the method according to the present disclosure, there are two separate batteries which are electrically separated such that a direct transfer of electric energy between the first energy storage unit and the second energy storage unit is not possible. Both batteries are configured to supply electric power to the load via the two converter units. This means that the load can use two independent sources of power. In other words, the power supply for the load is redundant. In this contest, the load may be understood as electric consumer. In a situation in which both batteries and both converter units are operational, this offers the possibility to act against imbalances of the first energy storage unit with respect to the second energy storage unit or vice versa. For this reason, the method according to the present disclosure considers first data indicative of such an imbalance. Based on this first data, the method provides an operational parameter which is configured to act against this imbalance. This means that the operational parameter is chosen such that it reduces the imbalance. In an example, the operational parameter may be chosen such that it eliminates the imbalance. However, this is not necessary. In more detail, the operational parameter may be an operational parameter for at least one of the first converter unit and the second converter unit. In this case, the operation of the first converter unit and the second converter unit is chosen such that the imbalance is reduced or eliminated. For example, the portion of power or energy that is provided to the load by one of the converter units is increased and the portion of power or energy that is provided to the load by the other one of the converter units is decreased. In this context, one portion of power may be as low as zero. Additionally or alternatively, the operational parameter may be an operational parameter for at least one of the first diode element and the second diode element. In this case, the operation of the first diode element and the second diode element is chosen such that the imbalance is reduced or eliminated. For example, the portion of power or energy that is provided to the load via one of the diode elements is increased and the portion of power or energy that is provided to the load via the other one of the diode elements is decreased. In this context, one portion of power may be as low as zero. Further additionally or alternatively, the operational parameter may be an operational parameter for the load. In this case, the operation of the load is chosen such that the imbalance is reduced or eliminated. It is noted that in this alternative it is a prerequisite that the load may be operational at different power levels. For example, the power or energy that is provided to the load may be increased or decreased. Altogether, using the method of the present disclosure, imbalances may be reduced or eliminated or facilitated. This has the consequence that repair and wear of the batteries is reduced or avoided. Put otherwise operation time of the batteries is enhanced.

According to an example, the first diode element is physically integrated into the first converter unit and the second diode element is physically integrated into the second converter unit. According to another example, the first diode element forms part of the electric connection between the first converter unit and the load, however is separate from the first converter unit. Furthermore, the second diode element may form part of the electric connection between the second converter unit and the load, however is separate from the second converter unit. The method according to the present disclosure is compatible with all of the above alternatives.

In the context of the present disclosure, an imbalance of the first energy storage unit with respect to the second energy storage unit or vice versa relates to the fact that the first energy storage unit and the second energy storage unit differ with respect to one or more properties. Optionally, an imbalance may imply that the difference in this one or more properties equals or exceeds a certain threshold. An example of such a property is a state of charge or a voltage. Thus, an imbalance between the first energy storage unit and the second energy storage unit describes the fact that a state of charge or voltage of the first energy storage unit differs from a state of charge or voltage of the second energy storage unit. Optionally, the imbalance may imply a certain delta or quantitative difference between the state of charge or voltage of the first energy storage unit and the state of charge or voltage of the second energy storage unit. Further examples are mentioned below.

According to an example, the first converter unit is a DC-DC converter unit and/or the second converter unit is a DC-DC converter unit. This offers the possibility to supply energy or power to the load at a voltage different from the voltage provided by the first energy storage unit and/or the second energy storage unit.

In an example, the first data is indicative of one or more of a state of charge of the first energy storage unit, a state of charge of the second energy storage unit, a capacity of the first energy storage unit, a capacity of the second energy storage unit, an output current of the first converter unit, an output current of the second converter unit, an age of the first energy storage unit, an age of the second energy storage unit, an internal resistance of the first energy storage unit, an internal resistance of the second energy storage unit, a cell imbalance of battery cells of the first energy storage unit, a cell imbalance of battery cells of the second energy storage unit, a wear status of the first energy storage unit, a wear status of the second energy storage unit, a defect status of the first energy storage unit, a defect status of the second energy storage unit, heat generated by the first energy storage unit, heat generated by the second energy storage unit, heat generated by the first converter unit, and heat generated by the second converter unit. In this context, the heat may be determined by detecting a temperature. All of the these properties describe at least an aspect of an imbalance between the first energy storage unit and the second energy storage unit if the property associated with the first energy storage unit differs from the property associated with the second energy storage unit. Properties associated with the first energy storage unit include properties actually describing the first converter unit and/or the first diode element. Properties associated with the second energy storage unit include properties actually describing the second converter unit and/or the second diode element. In an example, the first data comprises one property associated with the first energy storage unit and one property associated with the second energy storage unit. An imbalance may be determined and quantified by comparing these properties. It is understood that all of the above-mentioned properties may be actual properties, i.e. properties describing a current situation or state. Alternatively, all of the above-mentioned properties may be expected properties, i.e. properties describing an expected situation or state. In summary, using at least one of the above-mentioned properties, an imbalance may be reliably determined.

According to a further example, the operational parameter for the at least one of the first converter unit and the second converter unit comprises an output voltage for the respective converter unit. In other words, an output voltage of the first converter unit and/or the second converter unit is chosen such that an imbalance between the first energy storage unit and the second energy storage unit is reduced. This output voltage relates to a voltage directly at an output interface of the relevant converter unit. The output voltage of the first converter unit and/or the output voltage of the second converter unit is different from a voltage prevailing at the load. The voltage prevailing at the load is a result of a combination of the output voltage of the first converter unit and the output voltage of the second converter unit. More generally speaking, the voltage prevailing at the load is a result of a combination of all output voltages of all converter units electrically connected to the load and configured to provide energy and/or power to the load. In this context, the output voltage may be provided as an analogous signal. Alternatively, the output voltage may be provided as a digital signal, e.g. as a PWM signal (pulse width modulated signal). In the latter case, the voltage may be varied by varying on-times and off-times of the voltage signal and/or by varying the duty cycle. Consequently, the imbalance may be reduced or eliminated in a comparatively simple and reliable manner.

According to another example, an operational parameter is provided for each of the converter units. Additionally or alternatively, an operational parameter is provided for each of the diode elements. This allows for counteracting an imbalance in a very precise and reactive manner.

In an example, the operational parameter may be closed-loop-controlled. This for example applies to the operational parameter for the first converter unit and/or the second converter unit. Additionally or alternatively, this applies to the operational parameter for the first diode element and/or the second diode element. Further additionally or alternatively, this applies to the operational parameter of the load. Thus, this operational parameter may be put in practice in a particularly reliable manner.

In an example, providing an operational parameter for at least one of the first converter unit and the second converter unit comprises providing a target value for the operational parameter. Additionally or alternatively, providing an operational parameter for at least one of the first diode element and the second diode element comprises providing a target value for the operational parameter. Further additionally or alternatively, providing an operational parameter for the load comprises providing a target value for the operational parameter. In other words, the operational parameter is provided by providing or setting a target value. Sometimes, such a target value is called a reference value. Based thereon, the operational parameter may be controlled such that it reaches the target value or reference value. This may be done using closed-loop control. This is a simple and reliable way to reduce imbalances.

In an example, providing an operational parameter comprises continuously modifying the operational parameter and/or selecting a predefined level of the operational parameter. In the first case, the parameter may be modified without steps within a predefined interval. In the latter case, certain levels of the operational parameter, e.g. an output voltage of one or more of the first converter unit and the second converter unit, are predefined. This means that the entity associated with the operational parameter, e.g. one of the converter units, one of the diode elements or the load, may only be operated at these predefined levels. The levels of the operational parameter for example relate to voltage levels. Thus, in this case, the level of the operational parameter that is most appropriate for acting against the imbalance is chosen. This leads to an efficient and effective action against the imbalance. In an example, the operational parameter is non-zero. This applies to both the alternatives in which the operational parameter may be continuously modified and to the alternatives in which the operational parameter may be selected a predefined level of the operational parameter. In case the operational parameter is non-zero the associated entity, e.g. converter unit, diode element or load, contributes to the supply of power and/or energy to the load.

Further according to the present disclosure, a data processing apparatus is presented. The data processing apparatus comprises means for carrying out the method of the present disclosure. In other words, such a data processing apparatus forms a control unit or control apparatus for controlling the electric power supply system. Thus, using such a data processing apparatus, first data indicative of an imbalance between the first energy storage unit and the second energy storage unit may be considered. Based on this first data, an operational parameter may be provided which is configured to act against this imbalance. This means that the operational parameter is chosen such that it reduces the imbalance. In an example, the operational parameter may be chosen such that it eliminates the imbalance. However, this is not necessary. In more detail, the operational parameter may be an operational parameter for at least one of the first converter unit and the second converter unit, wherein the first converter unit and/or the second converter unit may be controlled by the data processing apparatus. In this case, the operation of the first converter unit and the second converter unit is chosen such that the imbalance is reduced or eliminated. For example, the portion of power or energy that is provided to the load by one of the converter units is increased and the portion of power or energy that is provided to the load by the other one of the converter units is decreased. In this context, one portion of power may be as low as zero. Additionally or alternatively, the operational parameter may be an operational parameter for at least one of the first diode element and the second diode element. In this case, the first diode element and/or the second diode element may be controlled by the data processing apparatus. Thus, the operation of the first diode element and the second diode element is chosen such that the imbalance is reduced or eliminated. For example, the portion of power or energy that is provided to the load via one of the diode elements is increased and the portion of power or energy that is provided to the load via the other one of the diode elements is decreased. In this context, one portion of power may be as low as zero. Further additionally or alternatively, the operational parameter may be an operational parameter for the load. In this case, the load may be controlled by the data processing apparatus. Thus, the operation of the load is chosen such that the imbalance is reduced or eliminated. It is noted that in this alternative it is a prerequisite that the load may be operational at different power levels. For example, the power or energy that is provided to the load may be increased or decreased. Altogether, using the method of the present disclosure, imbalances may be reduced or eliminated or facilitated. This has the consequence that repair and wear of the batteries is reduced or avoided. Put otherwise operation time of the batteries is enhanced.

A computer program comprising instructions which, when the program is executed by a computer, cause the computer to carry out the method of the present disclosure. Thus, using such a computer program, first data indicative of an imbalance between the first energy storage unit and the second energy storage unit may be considered. Based on this first data, an operational parameter may be provided which is configured to act against this imbalance. This means that the operational parameter is chosen such that it reduces the imbalance. In an example, the operational parameter may be chosen such that it eliminates the imbalance. However, this is not necessary. In more detail, the operational parameter may be an operational parameter for at least one of the first converter unit and the second converter unit, wherein the first converter unit and/or the second converter unit may be controlled by the computer program. In this case, the operation of the first converter unit and the second converter unit is chosen such that the imbalance is reduced or eliminated. For example, the portion of power or energy that is provided to the load by one of the converter units is increased and the portion of power or energy that is provided to the load by the other one of the converter units is decreased. In this context, one portion of power may be as low as zero. Additionally or alternatively, the operational parameter may be an operational parameter for at least one of the first diode element and the second diode element. In this case, the first diode element and/or the second diode element may be controlled by the computer program. Thus, the operation of the first diode element and the second diode element is chosen such that the imbalance is reduced or eliminated. For example, the portion of power or energy that is provided to the load via one of the diode elements is increased and the portion of power or energy that is provided to the load via the other one of the diode elements is decreased. In this context, one portion of power may be as low as zero. Further additionally or alternatively, the operational parameter may be an operational parameter for the load. In this case, the load may be controlled by the computer program. Thus, the operation of the load is chosen such that the imbalance is reduced or eliminated. It is noted that in this alternative it is a prerequisite that the load may be operational at different power levels. For example, the power or energy that is provided to the load may be increased or decreased. Altogether, using the method of the present disclosure, imbalances may be reduced or eliminated or facilitated. This has the consequence that repair and wear of the batteries is reduced or avoided. Put otherwise operation time of the batteries is enhanced.

A computer-readable storage medium comprising instructions which, when executed by a computer, cause the computer to carry out the method of the present disclosure. Thus, using such a computer-readable storage medium, first data indicative of an imbalance between the first energy storage unit and the second energy storage unit may be considered. Based on this first data, an operational parameter may be provided which is configured to act against this imbalance. This means that the operational parameter is chosen such that it reduces the imbalance. In an example, the operational parameter may be chosen such that it eliminates the imbalance. However, this is not necessary. In more detail, the operational parameter may be an operational parameter for at least one of the first converter unit and the second converter unit, wherein the first converter unit and/or the second converter unit may be controlled by the computer-readable storage medium. In this case, the operation of the first converter unit and the second converter unit is chosen such that the imbalance is reduced or eliminated. For example, the portion of power or energy that is provided to the load by one of the converter units is increased and the portion of power or energy that is provided to the load by the other one of the converter units is decreased. In this context, one portion of power may be as low as zero. Additionally or alternatively, the operational parameter may be an operational parameter for at least one of the first diode element and the second diode element. In this case, the first diode element and/or the second diode element may be controlled by the computer-readable storage medium. Thus, the operation of the first diode element and the second diode element is chosen such that the imbalance is reduced or eliminated. For example, the portion of power or energy that is provided to the load via one of the diode elements is increased and the portion of power or energy that is provided to the load via the other one of the diode elements is decreased. In this context, one portion of power may be as low as zero. Further additionally or alternatively, the operational parameter may be an operational parameter for the load. In this case, the load may be controlled by the computer-readable storage medium. Thus, the operation of the load is chosen such that the imbalance is reduced or eliminated. It is noted that in this alternative it is a prerequisite that the load may be operational at different power levels. For example, the power or energy that is provided to the load may be increased or decreased. Altogether, using the method of the present disclosure, imbalances may be reduced or eliminated or facilitated. This has the consequence that repair and wear of the batteries is reduced or avoided. Put otherwise operation time of the batteries is enhanced.

Moreover, according to the present disclosure, a use is presented. The use concerns use of first data indicative of an imbalance of one of a first energy storage unit and a second energy storage unit with respect to a respective other one of the first energy storage unit and the second energy storage unit. The first energy storage unit is electrically connected to a first converter unit and the second energy storage unit is electrically connected to a second converter unit. The first converter unit is electrically connected to a load via a first diode element and the second converter unit is electrically connected to the same load via a second diode element. The first data is used for providing an operational parameter for at least one of the first converter unit and the second converter unit. Additionally or alternatively, the first data is used for providing an operational parameter for at least one of the first diode element and the second diode element. Further additionally or alternatively, the first data is used for providing an operational parameter for the load. In this context, the first converter unit and/or the second converter unit may be a DC-DC converter unit. The use of the first data offers the opportunity to consider an imbalance between the first energy storage unit and the second energy storage unit may be considered. Thus, based on this first data, an operational parameter may be provided which is configured to act against this imbalance. This means that the operational parameter is chosen such that it reduces the imbalance. In an example, the operational parameter may be chosen such that it eliminates the imbalance. However, this is not necessary. In more detail, the operational parameter may be an operational parameter for at least one of the first converter unit and the second converter unit. In this case, the operation of the first converter unit and the second converter unit is chosen such that the imbalance is reduced or eliminated. For example, the portion of power or energy that is provided to the load by one of the converter units is increased and the portion of power or energy that is provided to the load by the other one of the converter units is decreased. In this context, one portion of power may be as low as zero. Additionally or alternatively, the operational parameter may be an operational parameter for at least one of the first diode element and the second diode element. Thus, the operation of the first diode element and the second diode element is chosen such that the imbalance is reduced or eliminated. For example, the portion of power or energy that is provided to the load via one of the diode elements is increased and the portion of power or energy that is provided to the load via the other one of the diode elements is decreased. In this context, one portion of power may be as low as zero. Further additionally or alternatively, the operational parameter may be an operational parameter for the load. Thus, the operation of the load is chosen such that the imbalance is reduced or eliminated. It is noted that in this alternative it is a prerequisite that the load may be operational at different power levels. For example, the power or energy that is provided to the load may be increased or decreased. Altogether, using the method of the present disclosure, imbalances may be reduced or eliminated or facilitated. This has the consequence that repair and wear of the batteries is reduced or avoided. Put otherwise operation time of the batteries is enhanced.

According to the present disclosure, an electric power supply system is presented. The electric power supply system comprises a first energy storage unit, a second energy storage unit, a first converter unit, a second converter unit, a first diode element, a second diode element, a load, and a data processing apparatus according to the present disclosure. The first energy storage unit is electrically connected to the first converter unit and the second energy storage unit is electrically connected to the second converter unit. The first converter unit is electrically connected to the load via the first diode element and the second converter unit is electrically connected to the load via the second diode element. The data processing apparatus is communicatively connected to at least one of the first converter unit, the second converter unit, the first diode element, the second diode element, and the load.

In such an electric power supply system, there are two separate batteries which are electrically separated such that a direct transfer of electric energy between the first energy storage unit and the second energy storage unit is not possible. Both batteries are configured to supply electric power to the load via the two converter units. This means that the load can use two independent sources of power. In other words, the power supply for the load is redundant. In a situation in which both batteries and both converter units are operational, this offers the possibility to act against imbalances of the first energy storage unit with respect to the second energy storage unit or vice versa. For this reason, in such an electric power supply system first data indicative of such an imbalance may be considered. Based on this first data, an operational parameter which is configured to act against this imbalance may be provided. This means that the operational parameter is chosen such that it reduces the imbalance. In an example, the operational parameter may be chosen such that it eliminates the imbalance. However, this is not necessary. In more detail, the operational parameter may be an operational parameter for at least one of the first converter unit and the second converter unit. In this case, the operation of the first converter unit and the second converter unit is chosen such that the imbalance is reduced or eliminated. To this end, the data processing apparatus is communicatively connected to the first converter unit and/or the second converter unit. For example, the portion of power or energy that is provided to the load by one of the converter units is increased and the portion of power or energy that is provided to the load by the other one of the converter units is decreased. In this context, one portion of power may be as low as zero. Additionally or alternatively, the operational parameter may be an operational parameter for at least one of the first diode element and the second diode element. In this case, the operation of the first diode element and the second diode element is chosen such that the imbalance is reduced or eliminated. To this end, the data processing apparatus is communicatively connected to the first diode element and/or to the second diode element. For example, the portion of power or energy that is provided to the load via one of the diode elements is increased and the portion of power or energy that is provided to the load via the other one of the diode elements is decreased. In this context, one portion of power may be as low as zero. Further additionally or alternatively, the operational parameter may be an operational parameter for the load. In this case, the operation of the load is chosen such that the imbalance is reduced or eliminated. To this end, the data processing apparatus is communicatively connected to the load. It is noted that in this alternative it is a prerequisite that the load may be operational at different power levels. For example, the power or energy that is provided to the load may be increased or decreased. Altogether, in such an electric power supply system, imbalances may be reduced or eliminated or facilitated. This has the consequence that repair and wear of the batteries is reduced or avoided. Put otherwise operation time of the batteries is enhanced.

In an example of the electric power supply system, the first converter unit is a DC-DC converter unit and/or the second converter unit is a DC-DC converter unit. This offers the possibility to supply energy or power to the load at a voltage different from the voltage provided by the first energy storage unit and/or the second energy storage unit.

According to another example, the first energy storage unit and the second energy storage unit of the electric power supply system are traction batteries for a vehicle. Thus, these batteries are configured to drive a vehicle, e.g. a passenger car or truck. In this case the reduced wear and/or repair requirements are particularly advantageous. The same applies to an enhanced operation time of the batteries.

According to the present disclosure, a vehicle is presented. The vehicle comprises an electric power supply system of the present disclosure. Consequently, wear of the vehicle is reduced as far as the wear concerns the electric power supply system and especially the batteries. This reduced repair requirements for the vehicle and, as a consequence, enhances operation time of the vehicle.

According to the present disclosure, an energy monitoring system is presented. The energy monitoring system comprises a first converter unit, a second converter unit, a first diode element, a second diode element, an energy storage information unit, and an energy control unit. The first converter unit is arrangeable between a first energy storage unit and a first load. The second converter unit is arrangeable between a second energy storage unit and the first load. The first diode element is arrangeable between the first converter unit and the first load to transfer a first output voltage from the first converter unit to the first load. The second diode element is arrangeable between the second converter unit and the first load to transfer a second output voltage from the second converter unit to the first load. The energy storage information unit is configured to provide current state information of the first energy storage unit and the second energy storage unit to the energy control unit. The energy control unit is configured to provide, e.g. determine, an adjustment amount of at least one of the first output voltage and the second output voltage based on the current state information to balance an energy level between the first energy storage unit and the second energy storage unit. The energy control unit is configured to adjust at least one of the first output voltage and the second output voltage by the adjustment amount.

In the context of the present disclosure, arrangeable may be understood in the electric sense, i.e. as electrically arrangeable.

The energy monitoring system according to the present disclosure allows a dynamic control of an energy transfer from each of the first energy storage unit and the second energy storage unit to electrical loads. The dynamic control may be realized by at least partially shifting the energy transfer between the converter units without transferring energy between the energy storage units. In other words, the energy monitoring system may enable a precise balance of active load currents across the first main converter unit and the second main converter unit.

The energy monitoring system facilitates controlling the energy level of the energy storage system, particularly configured for a redundant power supply for one or more low voltage loads, which may cause an energy drainage over time. Specifically, by monitoring the current state of the energy storage system in real time and adjusting the energy supply from the individual converter units without affecting the total energy supply to the respective load, a balanced energy supply to the electrical loads may be ensured. Adjusting the output voltage of each converter unit may lead to an indirect adjustment of a current flow for balancing the energy level between the first energy storage unit and the second energy storage unit.

The first load may comprise a low voltage system, to which a reliable energy supply needs to be ensured. Accordingly, a redundant energy supply may be provided to the first load. In other words, the energy supply to the first load may be ensured by both of the first energy storage unit and the second energy storage unit. During a specific monitoring period, the first load may be powered by only the first energy storage unit, only the second energy storage unit or both of them. Optionally, the first load may be also connected to a low voltage energy storage system.

The first energy storage unit and the second energy storage unit may be a high voltage battery system, e.g. providing a voltage of 400V to 800V. The first energy storage unit and the second energy storage unit may be separate encapsulation battery packs, or they can be part of the same battery pack as an individual battery cell or module. In case the energy storage units are battery packs, each thereof may comprise a plurality of battery cells. The energy storage units may as well be formed as a battery module. Alternatively, in case the energy storage units are battery packs, they may comprise battery modules. The first energy storage unit and the second energy storage unit may be connected in series or parallel or being galvanically isolated.

The first converter unit may be configured to convert a high voltage supplied from the first energy storage system to the first load with the first output voltage, which may be a low voltage. The second converter unit may be configured to convert a high voltage supplied from the second energy storage system to the first load with the second output voltage, which may be also a low voltage. The low voltage may be in a range of 12V to 48V. However, the first output voltage and/or the second output voltage may be substantially similar or even higher as the output voltage of the first energy storage unit and/or the second energy storage unit.

The first converter unit and/or the second converter unit may comprise an internal feedback loop, which measures actual output voltage, compares with a target voltage, and continuously regulates the output voltage to match the target voltage, during varying current load conditions. Accordingly, an indirect current output control of the converter units can be achieved by controlling output voltages.

The first output voltage from the first converter unit and the second output voltage from the second converter unit may be within an operational voltage supply range for the first load. Additional loads may be connected to the first converter unit and/or the second converter unit in parallel to the first load.

The first converter unit and the first diode element may be arranged in series. The first diode element may be configured to guide the first output voltage from the first converter unit only in direction to the first load. The second converter unit and the second diode element may be arranged in series. The second diode element may be configured to guide the second output voltage from the second converter unit only in direction to the first load. In other words, the first diode element and the second diode element may be configured to operate only in a forward biasing mode.

The first diode element and the second diode element may comprise a PN-type semiconductor, Schottky diode, silicon diode, any PN-type junction, a bipolar junction transistor, or an ideal diode. The first diode element and the second diode element may comprise the same or different type of the diode element.

The energy storage information unit may be a part of a battery management system (BMS). The BMS is an electronic system, which constantly monitors parameters related to the energy storage system. Thus, the energy storage information unit may be configured to monitor the current state of the first energy storage unit and the second energy storage unit such as energy storage data, storage capacity, wear information, charge status, voltage status, aging data, temperature, etc.

The energy control unit may be able to assess based on the current state information whether there is a balanced energy supply from the first energy storage unit and the second energy storage unit. If the energy control unit provides, e.g. determines, that the energy supply from the first energy storage unit and the energy supply the second energy storage unit are imbalanced, for instance due to the different charge status, different discharging speed, different aging status, etc., the energy control unit may be adapted to provide, e.g. determine, how the balanced energy supply from the first and second energy storage units may be achieved.

Accordingly, the energy control unit may be configured to analyze the current state information of the first energy storage unit and the second energy storage unit. Based on such analysis, the energy control unit may be able to provide, e.g. determine, which energy storage unit needs to be adjusted in terms of the charge status or the storage capacity, while maintaining a total amount of current supplied to the first load. The adjustment may be performed for only one of the first energy storage unit and the second energy storage unit or both energy storage units.

Specifically, the energy control unit may be adapted to adjust the amount of the first output voltage and/or the second output voltage, which may lead to an adjustment of a first output current from the first converter unit and/or a second output current from the second converter unit. A sum of the first output current and the second output current may be a total current supplied to the first load, wherein the total current may not be changed despite the adjustment of the first output voltage and/or the second output voltage.

The energy control unit may be able to adjust a certain target level of energy the capacity (actual charge level in kWh) based on discharging one or both energy storage units by means of converters and loads. The target energy level, or balance thereof, can be expressed as a) a percentage of the designed energy level or b) a percentage of the currently available total capacity, which can be lower than the designed maximum capacity.

For instance, the energy control unit may be able to equalize any imbalance between the first energy storage unit and the second energy storage unit over time to achieve 50% to 50% of total system charge in each energy storage unit relative to the currently available capacity, or achieve any other target balance, such as 40% to 60%.

The energy control unit may be adapted to perform the voltage adjustment at the first converter unit and/or the second converter unit at any suitable time, for instance at start/end of a driving cycle or during driving. The energy control unit may be also able to adjust energy transfer based on a detection of sudden activation or deactivation of at least the first load. The adjustment may be performed after a time interval of certain current flow ratio between the first converter unit and the second converter unit to compensate and adjust resulting energy levels in the first energy storage unit and the second energy storage unit.

In an example, the energy monitoring system may be scalable. In other words, the energy monitoring system may comprise a third converter unit, a fourth converter unit, a third diode element, a fourth diode element connectable to a third energy storage unit, a fourth energy storage unit, etc.

In an example, the energy control unit is configured to provide, e.g. determine, a target voltage of the first output voltage and/or the second output voltage. When analyzing the current state information of the first and second energy storage units and providing, e.g. determining, the adjustment amount of the first and/or second output voltages, the energy control unit may be adapted to provide, e.g. determine, the target voltage of the first output voltage and/or the second output voltage to be arrived to balance the energy level. The target voltage of the first converter unit and the target voltage of the second converter unit may be same or different from each other.

The energy control unit may be configured to generate at least two control signals comprising the target voltage information sent to each converter unit and control each converter unit individually. The two control signals may be also swapped between the first converter unit and the second converter unit. The energy control unit may be also configured to estimate a predetermined duration or variable duration of the adjustment. The control unit may be also configured to generate only one control signal. The first converter unit and the second converter unit may be adapted to interpret the common control signal with an opposite meaning, when receiving the common control signal. For instance, the first converter unit may be adapted to interpret the common control signal to increase the output voltage while the second converter unit may be adapted to interpret the common control signal to decrease the output voltage, and vice versa. The control signal may comprise various formats comprising a message, information, electrical current, radio frequency, light radiation or similar.

The energy control unit may be configured to vary the target voltage for the first converter and/or the second converter unit. Alternatively, the energy control unit may be configured to provide, e.g. determine, a fixed value of the target voltage for the first converter and/or the second converter unit. For instance, the first output voltage from the first converter unit may be varied by a first target voltage between 10V and 16V, wherein a second target voltage for adjusting the second output voltage of the second converter unit may be fixed at 13V.

In an example, the energy control unit may be configured to provide, e.g. determine, the adjustment amount of the first output voltage and/or the second output voltage while the first load is activated. The energy control unit may be configured to provide, e.g. determine, the adjustment amount while the energy supply to the first load continues, in other words, while the first load is consuming the energy transferred from the first energy storage unit and/or the second energy storage unit.

When providing, e.g. determining, the adjustment amount of the first output voltage and/or the second output voltage, the energy control unit may be able to take account of a current energy consumption of the first load. Accordingly, the energy control unit may be adapted to implement the on-going adjustment of the first output voltage and/or the second output voltage based on the current energy consumption of the first load and the current energy state information of the first energy storage unit and the second energy storage unit.

In an example, the energy control unit is configured to linearly adjust at least one of the first output voltage and the second output voltage by the adjustment amount. When adjusting at least one of the first output voltage and the second output voltage, the energy control unit may be adapted to gradually adjust the first output voltage and the second output voltage to the respective target voltage. The term "linearly" may be understood as infinitely small steps. However, it may be also possible to adjust the first output voltage and/or the second output voltage non-linearly, logarithmically, or similar.

For instance, if the first output voltage from the first converter unit may need to be reduced, the energy control unit may be capable to ramp down the first output voltage linearly to the first target voltage. Likewise, if the second output voltage from the second converter unit may need to be increased, the energy control unit may be capable to ramp up the second output voltage linearly to the second target voltage.

In an example, the first diode element and the second diode element are configured to perform a voltage drop in direction to the first load. The control unit is configured to adjust an amount of the voltage drop of the first diode element and the second diode element to balance the energy level between the first energy storage unit and the second energy storage unit. In addition to the adjustment of the first output voltage and/or the second output voltage, the first diode element arranged between the first converter unit and the first load and/or the second diode element arranged between the second converter unit and the first load may be adapted to additionally control the voltage adjustment.

The first diode element may be configured to drop a voltage level of the first output voltage transferred from the first converter unit to a lower level in direction to the first load. Likewise, the second diode element may be configured to drop the voltage level of the second output voltage transferred from the second converter unit to a lower level in direction to the first load. In other words, the first diode element and the second diode element may be adapted to perform a forward voltage drop in a forward biasing mode. Further, the first diode element and the second diode element may comprise very high resistance and block current in a reverse biasing mode.

The energy control unit may be able to provide, e.g. determine, the adjustment amount of an output voltage from the first diode element and/or the second diode element. The amount of the voltage drop through the first diode element and amount of the voltage drop through the second diode element may be same or different from each other. Accordingly, balancing the energy level between the first energy storage unit and the second energy storage unit may be facilitated.

In an example, the first converter unit is further connectable to a second load and the second converter unit is further connectable to a third load. The energy control unit is configured to provide, e.g. determine, the adjustment amount of at least one of the first output voltage and the second output voltage based on a current energy consumption of the second load and/or the third load. Various low voltage loads couplable with the energy monitoring system may facilitate balancing the energy level between the first energy storage unit and the second energy storage unit.

The first load, the second load, and/or the third load may be configured to dynamically change their energy consumption by being switched on or off or changing their duty cycle, in other words PWM (pulse width modulation). Typical beforehand unpredictable load may be electrical power assisted steering maneuver, heating devices, tapping off power to vehicle external devices, etc.

The energy control unit may be able to provide, e.g. determine, the adjustment amount of the first output voltage and/or the second output voltage by including the dynamical energy consumption of the second load connected to the first converter unit and/or the third load connected to the second converter unit. Accordingly, a reliable balance of the energy level between the first energy storage unit and the second energy storage unit can be achieved.

In an example, the energy monitoring system may further comprise a current measurement element. The current measurement element may be configured to measure the first output current from the first converter unit, the second output current from the second converter unit, the first input current transferred from the first diode element to the first load and/or the second input current transferred from the second diode element to the first load.

In an example, the energy monitoring system further comprises a diagnostic means configured to monitor, the adjustment of at least one of the first output voltage and the second output voltage reveals as provided, e.g. determined, by the energy control unit. The diagnostic means may be integrated in the energy control unit.

For instance, the first converter unit may be adapted to increase its output voltage over the second converter unit. Accordingly, the first converter unit may be able to increase the first output current compared to the previous current before the voltage increment. Likewise, if the first converter unit decreases its output voltage over the second converter unit, the first converter unit may be able to decrease the first output current compared to the previous current before the voltage decrement.

The diagnostic means may be able to compare the predicted first output current with the actual first output measured by the current measurement element. If the actual first output current differs from the predicted first output current, the energy control unit may be capable to adjust the control signal or the target voltage to redistribute, compensate or modify the first output voltage and/or the second output voltage.

The predicted first output current may correspond to a current provided, e.g. determined, based on the first output voltage from the first converter unit. Likewise, the predicted second output current may correspond to a current provided, e.g. determined, based on the second output voltage from the second converter unit.

Similarly, the diagnostic means may be able to compare the predicted first input current with the actual first input measured by the current measurement element. If the actual first input current differs from the predicted first input current, the energy control unit may be capable to adjust the control signal or the target voltage to redistribute, compensate or modify the first input voltage and/or the second input voltage.

The predicted first input current may correspond to a current provided, e.g. determined, based on the first output voltage from the first converter unit and the first voltage drop at the first diode element. Likewise, the predicted second input current may correspond to a current provided, e.g. determined, based on the second output voltage from the second converter unit and the second voltage drop at the second diode element.

If there is no current change, the diagnostic means may be able to provide, e.g. determine, a fault or malfunction in the converter units, control signals, current measurement and/or diode elements.

In an example, the energy control unit may be configured to provide, e.g. determine, a reaction against a malfunction. If the first converter unit and/or the second converter unit lose the control signal generated at energy control unit, they may perform any suitable handling such as a) continuing the adjustment using last received control information, b) assuming a predetermined default substituted value for the control information, c) assuming a substituted value for the control information based on previous control information e.g., statistics for control information, or similar.

If the energy control unit loses the current state information of the first energy storage unit and/or the second energy storage unit, the energy control unit may perform any suitable handling such as a) continuing the adjustment using last received control information, b) assuming a predetermined default substituted value for the control information, c) assuming a substituted value for the control information based on previous control information e.g., statistical data, or similar or d) making future state estimation of the first energy storage unit and/or the second energy storage unit based on actual currents.

In an example, the first converter unit comprises a first DC-DC converter element and the second converter unit comprises a second DC-DC converter element. The first converter unit and the second converter unit may comprise an isolated DC-DC converter. The isolated DC-DC converter may be galvanically isolated and may prevent an occurrence of an overvoltage.

In an example, the first converter unit may comprise a first main DC-DC converter element and a first sub DC-DC converter element and the second converter unit may comprise a second main DC-DC converter element and a second sub DC-DC converter element. The first sub DC-DC converter element may be configured to provide a lower output voltage than the first main DC-DC converter element. Similarly, the second sub DC-DC converter element may be configured to provide a lower output voltage than the second main DC-DC converter element.

The first output voltage or the second output voltage may be adjusted by incorporating at least one of the first sub DC-DC converter element and the second sub DC-DC converter element. Specifically, the output voltage from each energy storage unit may be adjusted by activating only one of the first sub DC-DC converter element and the second sub DC-DC converter element. Furthermore, only one of the first main DC-DC converter element and the first sub DC-DC converter element may be activated to adjust the first output voltage over the second output voltage from the second converter unit.

For instance, the first sub DC-DC converter element may be configured to provide an output voltage of 12V and the first main DC-DC converter element may be configured to provide an output voltage of 14V. Further, the second sub DC-DC converter element may be configured to provide an output voltage of 13V and the second main DC-DC converter element may be configured to provide an output voltage of 13V. By activating the first sub DC-DC converter element or the first main DC-DC converter element, the voltage from the first energy storage unit can be controlled to be increased relative to any voltage output form the second energy storage unit.

In an example, the first converter unit may comprise a first intermediate AC converter means and the second converter unit may comprise a second intermediate AC converter means. The first intermediate AC converter means may comprise a first AC-DC element and a first DC-AC element and the second intermediate AC converter means may comprise a second AC-DC element and a second DC-AC element.

In an example, the first diode element and the second diode element are integrated in the first load. In other words, the first load may comprise the first diode element and the second diode element as a part of the first load. Still in other words, the first diode element and the second diode element may not be arranged separately in each power supply circuit of the first energy storage unit and the second energy storage unit but integrated in the first load. Accordingly, the first output voltage and/or the second output voltage may be transferred to the first load, which may take over controlling the voltage drop of the first output voltage and/or the second output voltage via the first diode element and/or the second diode element, respectively.

In an example, the first diode element and the second diode element are an ideal diode element and forming a switch means for the first load. The ideal diode element may be suitable for applications which need both input reverse polarity protection as well as reverse current blocking. The ideal diodes may operate as voltage-controlled switches.

The ideal diode element with a hysteretic control may allow a distinct and digital control of all currents transferred from the first and/or second converter unit. With the hysteretic control of the ideal diodes, one of the first and second converter units having the highest output voltage may provide all current to the first load and the remaining converter unit may be disconnected until its voltage is increased or the other converter unit fails.

In an example, the energy control unit is configured to provide, e.g. determine, an amount of time for adjusting at least one of the first output voltage and the second output voltage by the adjustment amount. The energy control unit may be able to adjust the initial imbalance of charge among the energy storage units over time. In addition to the adjustment amount of the output voltage of the first converter unit and/or the second converter unit, the energy control unit may be configured to provide, e.g. determine, a time period, at which the adjustment amount may be applied. After an elapsed time, the target charge balance can be achieved.

Particularly when applying the ideal diode elements, the linear simultaneous control of the voltage distribution across the first converter unit and the second converter unit may be impossible. Accordingly, the voltage distribution, consequently the current distribution may be modulated and controlled over time.

The energy control unit may be adapted to provide, e.g. determine, a first time interval, in which the first converter unit may provide entire current, and a second time interval, in which the second converter unit may provide entire current to the first load, which may be regarded as a linear control over time. In other words, the energy control unit may be adapted to implement a pulse width modulation. By controlling the duration of the first time interval versus the second time interval, the voltage adjustment between the first energy storage unit and the second energy storage unit may be performed.

For instance, the first time interval for the first converter unit may be provided, e.g. determined as 0,1s and the second time interval for the second converter unit may be determined as 0,9s. This cycle may be repeated over longer time. Such distribution of the time interval may correspond to 10% voltage/current contribution from the first converter unit and 90% current/voltage contribution from the second converter unit. Since at least one of first and second time interval may be adjusted, this can correspond to a linear control over time.

However, if the first converter unit is determined to provide 100% of the current and the second converter unit is determined to provide 0% of the current over a time interval, the first converter output voltage may be set to be highest for the complete duration of the time interval.

In an example, the energy control unit is configured to increase the first output voltage transferred from the first converter unit, if the energy level of the first energy storage unit is higher than the energy level of the second energy storage unit.

The energy storage information unit may be able to monitor that the first energy storage unit comprises a higher energy level than the second energy storage unit. Accordingly, the energy control unit may be adapted to counteract such imbalance by indirectly increasing the first output current via the first output voltage from the first converter unit and/or indirectly decreasing the second output current from the second converter unit via the second output voltage.

Alternatively, the energy control unit may be configured to decrease the first output voltage transferred from the first converter unit and increase the second output voltage transferred from the second converter unit, if the energy level of the first energy storage unit is lower than the energy level of the second energy storage unit.

When adjusting at least one of the first output voltage and the second output voltage, it is not necessary to achieve the identical energy level of the first energy storage unit and the second energy storage unit, but a balanced energy level between them. By providing, e.g. determining, a capacity difference between a target capacity and a current capacity for both energy storage units, the energy storage unit with a highest difference may provide most energy to reach a balanced state.

Providing, e.g. determining, the capacity difference may be achieved by two steps: a) controlling converter units to achieve target capacity balance (kWh or Ah) between the energy storage units, b) controlling converter voltages based on measured currents to increase/decrease currents as provided, e.g. determined, by a).

In an example, the energy control unit is configured to increase the first output voltage transferred from the first converter unit, if a first output current is lower than a second output current. The energy control unit may be configured to monitor that the first output current transferred from the first converter unit to the first load is lower than the second output current transferred from the second converter unit to the first load. Accordingly, the energy control unit may be adapted to counteract such imbalance by indirectly increasing the first output current via the first output voltage from the first converter unit and/or indirectly decreasing the second output current from the second converter unit via the second output voltage.

According to the present disclosure, an energy storage system is also presented. The energy storage system comprises an energy monitoring system as described above, a first energy storage unit and a second energy storage unit.

According to the present disclosure, a vehicle is also presented. The vehicle comprises an energy storage system as described above. The vehicle may be a battery electric vehicle (BEV) or a hybrid electric vehicle (HEV).

According to the present disclosure, an energy monitoring method is also presented. The method comprises, not necessarily in this order,
- providing current state information of a first energy storage unit and a second energy storage unit to an energy control unit,
- providing, e.g. determining, an adjustment amount of at least one of a first output voltage and a second output voltage based on the current state information to balance an energy level between the first energy storage unit and the second energy storage unit, and
- adjusting at least one of the first output voltage and the second output voltage by the adjustment amount.
A first converter unit is arrangeable between a first energy storage unit and a first load. A second converter unit is arrangeable between a second energy storage unit and the first load. A first diode element is arrangeable between the first converter unit and the first load to transfer the first output voltage from the first converter unit to the first load. A second diode element is arrangeable between the second converter unit and the first load to transfer the second output voltage from the second converter unit to the first load.

According to the present disclosure, a computer program element may be also presented. The computer program element may be configured for an energy monitoring system as described above. The computer program element is adapted to perform the encapsulation monitoring method steps as described above, when executed by a processing element.

According to the present disclosure, one or more computer storage media may be presented. The computer storage media is encoded with instructions, that when executed by a computer, cause the computer to perform the operations of the respective method as described above.

The storage media may comprise internal to a computing device, such as a computer's SSD, or a removable device such as an external HDD or universal serial bus (USB) flash drive. There are also other types of storage media, including magnetic tape, compact discs (CDs) and non-volatile memory (NVM) cards.

In the claims, the word "between" should be interpreted broadly. Hence, the mere fact a technical feature being arrangeable between two other technical features does not imply the exclusion of further additional features also being present "between" the other technical features.

It should be noted that the above examples may be combined with each other irrespective of the aspect involved. Accordingly, the method may be combined with structural features and, likewise, the system may be combined with features described above with regard to the method.

These and other examples of the present disclosure will become apparent from and elucidated with reference to the embodiments described hereinafter.

### BRIEF DESCRIPTION OF DRAWINGS

Examples according to the present disclosure will be described in the following with reference to the following drawings.
- Fig. 1: shows schematically an example of an electric power supply system according to the present disclosure.
- Fig. 2: shows schematically an example of an electric power supply system according to the present disclosure.
- Fig. 3: shows schematically an example of an electric power supply system according to the present disclosure.
- Fig. 4: shows schematically an example of an electric power supply system according to the present disclosure.
- Fig. 5: shows schematically an example of an electric power supply system according to the present disclosure.
- Fig. 6: shows schematically an example of part of an electric power supply system according to the present disclosure.
- Fig. 7: shows schematically an example of a simulation of part of an electric power supply system according to the present disclosure.
- Fig. 8: shows schematically an example of an electric power supply system according to the present disclosure.
- Fig. 9: shows schematically an example of a simulation of part of an electric power supply system according to the present disclosure.

### DESCRIPTION OF EXAMPLES

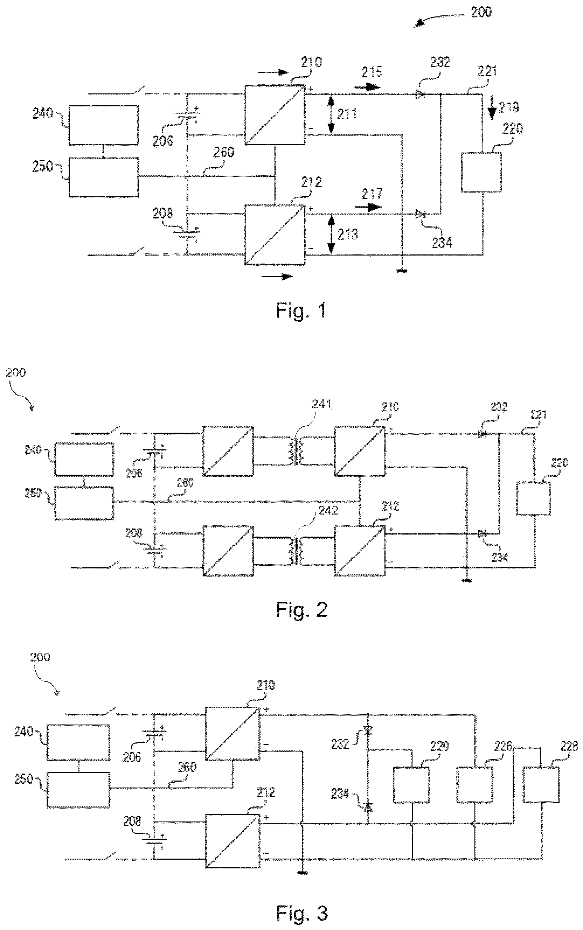

Fig. 1 shows an energy monitoring system 200 for an energy storage system, which may be arranged in an electric vehicle as a traction energy source. The energy storage system may be a high voltage energy storage system, which provides tens of kilowatt-hours as energy for operating the vehicle. The energy storage system may comprise a plurality of rechargeable energy storage modules and/or energy storage cells such as lithium-ion cells, nickel metal hydride cells or the like.

Due to the fact that the energy monitoring system 200 may be used as a traction energy source, the energy monitoring system 200 may as well be designated an electric power supply system.

The energy monitoring system 200 comprises a first converter unit 210, a second converter unit 212, a first diode element 232, a second diode element 234, an energy storage information unit 240 and an energy control unit 250.

A first load 220 may be a low voltage system, to which a reliable energy supply needs to be ensured. A redundant energy supply to the first load 220 can be realized by the first converter unit 210 and the second converter unit 212. Accordingly, the first converter unit 210 is arrangeable between a first energy storage unit 206 and the first load 220 and the second converter unit 212 is arrangeable between a second energy storage unit 208 and the first load 220. This arrangement is to be understood in the electric sense.

The first energy storage unit 206 and the second energy storage unit 208 may be different cells in a same energy storage module, different energy storage modules in a same energy storage system or different energy system.

The first converter unit 210 comprises a first DC-DC converter element and the second converter unit 212 comprises a second DC-DC converter element. As shown in Fig. 2, the first converter unit 210 may also comprise a first intermediate AC converter means 241 and the second converter unit 212 may also comprise a second intermediate AC converter means 242.

The first diode element 232 is arrangeable between the first converter unit 210 and the first load 220 to transfer a first output voltage 211 from the first converter unit 210 to the first load 220. The first converter unit 210 and the first diode element 232 are arranged in series. The first diode element 232 is configured to guide a first output voltage 211 from the first converter unit 210 only in direction to the first load 220. Also in this context, the arrangement is to be understood in the electric sense.

The second diode element 234 is arrangeable between the first converter unit 212 and the first load 220 to transfer a second output voltage 213 from the first converter unit 212 to the first load 220. The first converter unit 212 and the second diode element 234 are arranged in series. The second diode element 234 is configured to guide a second output voltage 213 from the first converter unit 212 only in direction to the first load 220. Also here, the arrangement is to be understood in the electric sense.

In other words, the first diode element 232 and the second diode element 234 are configured to operate only in a forward biasing mode. In addition, the first diode element 232 and the second diode element 234 are configured to perform a voltage drop in direction to the first load 220.

The energy storage information unit 240 is configured to provide current state information of the first energy storage unit 206 and the second energy storage unit 208 to the energy control unit 250.

The energy storage information unit may as well be designated as a computer-readable storage medium. The energy storage information unit 240 and the energy control unit 250 may be summarized as a data processing apparatus.

The energy control unit 250 is configured to send a first control signal 260 comprising a first target voltage information to the first converter unit 210 and/or a second control signal 260 comprising a second target voltage information to the second converter unit 212. The first converter unit 210 and/or the first converter unit 212 may comprise an internal feedback loop that measures actual output voltage and compares with the respective target voltage determined by the energy control unit 250.

In this context, the first target voltage information and/or the second target voltage information are operational parameters for the first converter unit 210 and the second converter unit 212 respectively.

In order to perform these tasks, a computer program may be used. The computer program may be stored on the computer-readable storage medium.

The energy control unit 250 is configured to determine an adjustment amount of at least one of the first output voltage 211 and the second output voltage 213 based on the current state information to balance an energy level between the first energy storage unit 206 and the second energy storage unit 208, while the first load 220 is activated. The energy control unit 250 is configured to adjust at least one of the first output voltage 211 and the second output voltage 213 by the adjustment amount. Specifically, the energy control unit 250 can be adapted to linearly adjust at least one of the first output voltage 211 and the second output voltage 213 by the adjustment amount.

In this context, the current state information forms first data indicative of an actual or expected imbalance of one of the first energy storage unit 206 and the second energy storage unit 208.

For instance, the energy control unit 250 is able to increase the first output voltage 211 transferred from the first converter unit 210, if the energy level of the first energy storage unit 206 is higher than the energy level of the second energy storage unit 208. Further, the energy control unit 250 is also able to increase the first output voltage 211 transferred from the first converter unit 210, if a first output current 215 is higher than a second output current 217.

Moreover, the energy control unit 250 is configured to adjust an amount of the voltage drop of the first diode element 232 and the second diode element 234 and apply the determined voltage drop to the respective diode element to balance an energy level between the first energy storage unit 206 and the second energy storage unit 208.

In order to achieve this, the energy control unit 250 provides an operational parameter for the first diode element 232 and the second diode element 234.

The energy monitoring system 200 further comprises a current measurement means element configured to measure an input current 219 transferred from the first diode element 232 to the first load 220 and the second diode element 234 to the first load 220. The input current 219 may be a sum of the first output current 215 from the first converter unit 210 and the second output current 217 from the second converter unit 212. Additionally, or alternatively, the current measurement means element is also capable to measure the first output current 215 transferred from the first converter unit 210 and/or the second output current 217 transferred from the first converter unit 212.

The energy monitoring system 200 further comprises a diagnostic means configured to monitor, whether the adjustment of at least one of the first output voltage 211 and the second output voltage 213 reveals as determined by the energy control unit 250. The diagnostic means may be able to compare the predetermined input current with the actual input current 219 measured by the current measurement element. If the actual input current 219 differs from the predetermined input current, the energy control unit 250 may be capable to adjust the control signal 260 or the target voltage to redistribute, compensate or modify the first output voltage 211 and/or the second output voltage 213.

Another term for diagnosing the actual first output voltage 211 and the second output voltage 213 and adapting the associated target values based thereon, is closed-loop control.

As shown in Fig. 3, the first converter unit 210 can be further connected to a second load 226 and the first converter unit 212 can be further connected to a third load 228. The energy control unit 250 is configured to determine the adjustment amount of at least one of the first output voltage 211 and the second output voltage 213 based on the current state information of the second load 226 and/or the third load 228. Accordingly, the energy monitoring system 200 is able to dynamically adjust the output voltage or current also based on the dynamically added or subtracted energy consumption.

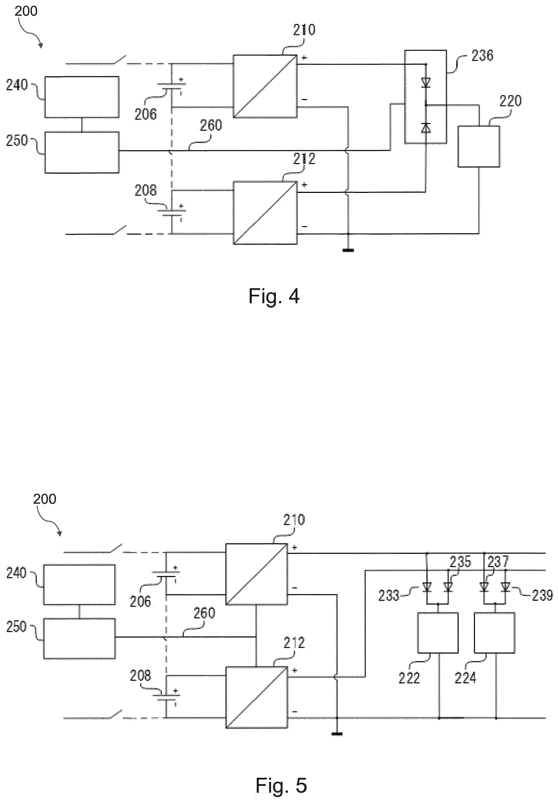

Fig. 4 shows an alternative arrangement of the diode elements. The first diode element 232 and the second diode element 234 are an ideal diode element and form a switch means 236 for the first load 220. The ideal diode element with a hysteretic control may allow a distinct and digital control of all currents transferred from the first and/or second converter units 210, 212.

In an example for automotive use the voltages 211 and 213 can be similar or identical due to the converter units 210, 212 having a fixed voltage output, which may be similar, and no voltage control input. The control signal 260 from energy control unit 250 is able to control the operation of the ideal diode 236, which may comprise MOSFET.

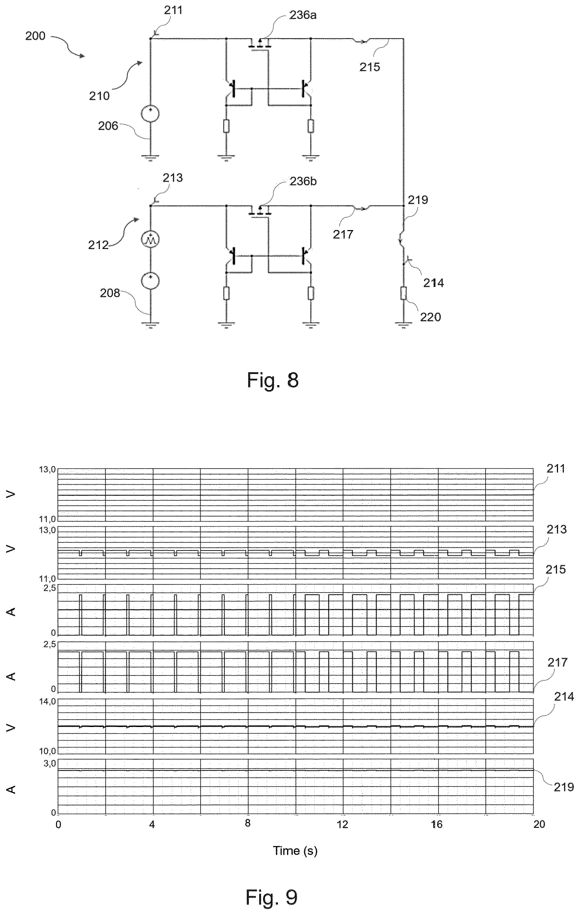

Ideal diodes used in automotive typically have a voltage comparison means connected to each power supply input and to the power supply output. In other words, if the first output voltage 211 is higher than a load input voltage 214, the ideal diode 236a is switched on and ideal diode 236b is switched off (see also Fig. 8). If the second output voltage 213 is higher than the load input voltage 214, the ideal diode 236b is switched on and ideal diode 236a is switched off.

If both of the first output voltage 211 and the second output voltage 213 are same, the control signal 260 can add or subtract respectively a small voltage into each voltage comparison of the first output voltage 211 vs. the load input voltage 214 and the second output voltage 213 vs. load input voltage 214 or vice versa. This may give a priority of either voltage the first output voltage 211 or the second output voltage 213 despite they are similar or identical.

Accordingly, the voltage comparison may be slightly manipulated such that either first output voltage 211 or the second output voltage 213 has a slightly higher voltage over the load input voltage 214. Hence, an inability to vary the voltages 211, 213 can be overcome and the control of currents 215, 217 from the converter units 210, 212 to load by the control signal 260 may be accomplished.

Fig. 5 shows another alternative arrangement of the diode elements, in which the first diode element 233 and the second diode element 235 are integrated in the first load 222 and a third diode element 237 and a fourth diode element 239 are integrated in the second load 224.

Accordingly, the energy monitoring system 200 facilitates controlling the energy level of the energy storage system, which may be imbalanced over time due to one or more low voltage loads.

### Example I

The energy storage information unit 240 detects that the first energy storage unit 206 has higher energy stored than the second energy storage unit 208. The amount of the first output current 215 being provided by the first converter unit 210 to the first load 220 needs to be increased and the second output current 217 provided by the second converter unit 212 needs to be decreased. Energy control unit 250 uses the current state information of the energy storage units 206, 208, and determines an adjustment amount of the first output voltage 211 and/or the second output voltage 213 to balance the energy level between the first energy storage unit 206 and the second energy storage unit 208. The actual output current 215, 217 detected by the current measurement means can be a starting point for how the output current can be adjusted.

In this example, the energy stored by the first energy storage unit 206 and the energy stored by the second energy storage unit 208 form part of first data indicative of an actual or expected imbalance between the first energy storage unit 206 and the second energy storage unit 208.

For example, a difference between target output currents and actual output currents can be calculated. Alternatively, currents can be adjusted relative to their previous currents before adjustment, i.e. increasing X percent the output current of 210 and decreasing Y percent of output current of 212. The control signal 260 can request the change of currents for the first converter unit 210 and the second converter unit 212. The current adjustment can be performed once or several times to fine tune the current to the desired output currents. Over time, the control of current would reach a target energy level for both energy storage units 206, 208.

### Example II

The energy control unit 250 detects that the first output current 215 from the first converter unit 210 is higher than output current 217 from the second converter unit 212, to such degree that counteracting this imbalance is required. The output currents are static. Accordingly, the output voltage 213 from the second converter unit 212 to the first load 220 is to be increased and the first output current 215 provided by the first converter unit 210 is to be decreased. The energy control unit 250 uses the current state information of the energy storage units 206, 208, and determines an adjustment amount of the first output voltage 211 and/or the second output voltage 213 to balance the energy level between the first energy storage unit 206 and the second energy storage unit 208. Actual output current 215, 217 detected by the current measurement means can be a starting point for how the output current can be adjusted. The adjustment amount can be determined as in Example I.

In this example, the first output current 215 and the second output current 217 form part of first data indicative of an actual or expected imbalance between the first energy storage unit 206 and the second energy storage unit 208.

### Example III

At least one of the first energy storage unit 206 and the second energy storage unit 208 are being charged or the current state information generated by the energy storage information unit 240 has been updated. Further, the first converter unit 210, the second converter unit 212 and at least the first load 220 are active. The new energy storage situation in the energy storage units 206, 208 needs an adjustment of output currents 215, 217. For example, a first energy storage unit 206 that previously had lower energy than the second energy storage unit 208 before charging, has a higher amount of energy after charging. The energy level between the first energy storage unit 206 and the second energy storage unit 208 can be balanced same as in Example I.

In this example, the state of charge of the first energy storage unit 206 and the state of charge of the second energy storage unit 208 form part of first data indicative of an actual or expected imbalance between the first energy storage unit 206 and the second energy storage unit 208.

More use cases can be based on battery pack factor such as designed energy storage capacity, degradation of energy storage capacity over time, actual stored energy level, age, internal resistance, sustained cell imbalances, or wear factors. Use cases can also be based on system heat generation in the battery packs or converter units. All these properties form part of first data indicative of an actual or expected imbalance between the first energy storage unit 206 and the second energy storage unit 208.

### Example IV

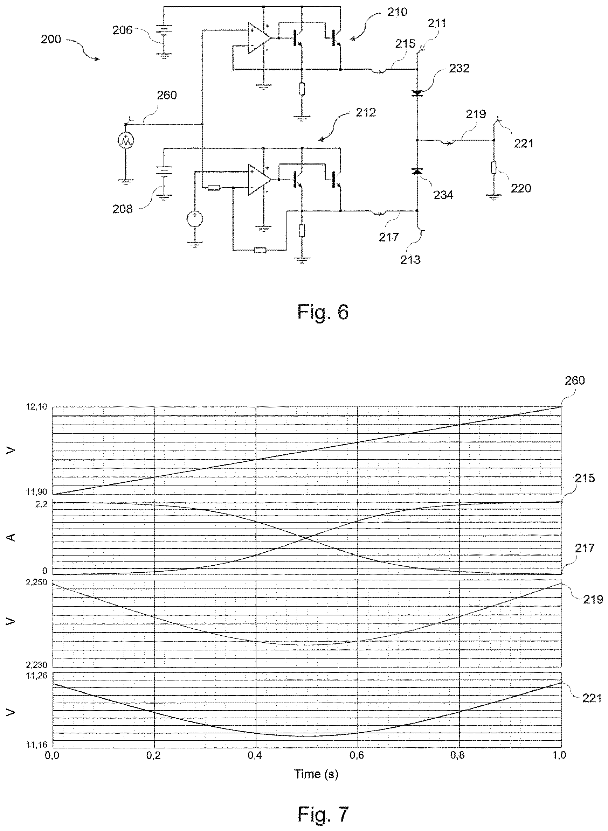

Schematic of simulation circuit is shown in Fig. **Fehler! Verweisquelle konnte nicht gefunden werden.**6 and simulation results are shown in Fig. 7. The simulation is configured to demonstrate the principal current control into one resistive load by using two variable DC power supplies 210, 212, their output voltages 211, 213 and semiconductor silicon PN-type diodes 232, 234 connected to the load 220 (see also Fig. 3). Load 220 is resistive in this example but can be other type of loads.

At start of the simulation, a current flow is dominated by the second converter unit 212 transferring the second output current 217 by contribution of 100% and 0% contribution by the first converter unit 210 transferring the first output current 215. At end of simulation, the power supply current is changed to 0% of the second converter unit 212 and 100% of the first converter unit 210. The control signal 260 is a control voltage that is ramped from a starting control voltage of 11.9V up to 12.1V. This result in that first output voltage 211 is ramped linearly from 11,9V up to 12,1V while simultaneously the second output voltage 213 is ramped linearly from 12.1V down to 11.9V. Thus, in this example, both voltages 211, 213 are adjusted.

This simplified control circuit shows that even redirection of the current flow from power supplies 210, 212, it maintains a very stable voltage to the first load 220. Despite the variation in supply output voltages 215, 217 before diodes 232, 234, the actual voltage 221 on the first load 220 is very stable at 11.18V-11.25V. The total load current 219 is also very stable at 2.2A despite the large shift in the current flow from power supplies 210, 212. This is due to the nonlinear relationship of current to voltage ratio of semiconductor diodes 232, 234, which evens input current 219 and voltage 221 to the first load 220.

### Example V

Schematic of simulation circuit is shown in Fig. 8 and simulation results are shown in Fig. 9. The simulation is configured to demonstrate the principal current control into one resistive load by using two variable DC power supplies 210, 212, their output voltages 211, 213 and an ideal diode circuit comprised of switchable metal-oxide-semiconductor field-effect-transistor (MOSFET) 236a, 236b connected to the first load 220(see also Fig. 3). This forms a simplified diode-OR controller where the highest input voltage of 211, 213 is the voltage being the only power supply providing current to load 220 by one of MOSFET 236a, 236b currently being switched on. Load 220 is resistive in this example.

This is a pulse width modulation based (PWM) control of current at 1Hz. At any moment, current 219 is completely provided by one of the DC power supplies 210, 212. Both DC power supplies 210, 212 provide a voltage output 211, 213 that lies in an operational range 214 for the first load 220. Two intervals of 10 seconds each is simulated, with different duty cycles.

At first 10s, a duty cycle of 10% is set for the first DC power supply 210 current contribution and 90% duty cycle for the second DC power supply 212, and for the remaining 10s 60% is set for the first DC power supply 210 current contribution and 40% duty cycle for the second DC power supply 212. By modulating the second DC power 212 to add or subtract 0.1V from a base 12V, the ideal diode circuit will switch to the DC-supply momentarily having the highest voltage. This modulation of duty cycle is the equivalent to control signal 260. Here the first DC power supply 210 is fixed at 12.0V while the second DC power supply 212 switches between 11.9V and 12.1V based on the duty cycle. Percentage of duty cycle is not displayed but each output current 215, 217 is shown to switch between the extremes 0A and 2.4A.

Therefore, over time, any PWM duty cycle can be applied to precisely control energy between power supplies 210, 212. Compared to the analog circuit of Fig. 7, this has less voltage drop and is more efficient with lower power loss since it has lower voltage drops over the MOSFET being currently switched on.

Despite the variation in supply output voltages 211, 213 before diodes 236a, 236b, the actual voltage 214 on the first load is very stable at around 12V. Load current 219 is also very stable at 2.4A despite the full switching of currents 215, 217 between power supplies 210, 212. By modulating the output voltage 213 of the second power supply 212 just enough to perform the ideal diode switching, the voltage ripple to the load is minimized.

It has to be noted that examples of the disclosure are described with reference to different subject matters. In particular, some examples are described with reference to method type claims whereas other examples are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the disclosure has been illustrated and described in detail in the drawings and description, such illustration and description are to be considered illustrative or exemplary and not restrictive. The disclosure is not limited to the disclosed examples. Other variations to the disclosed examples can be understood and effected by those skilled in the art in practicing a claimed disclosure, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. A method for controlling an electric power supply system (200), the electric power supply system (200) comprising a first energy storage unit (206) electrically connected to a first converter unit (210) and a second energy storage unit (208) electrically connected to a second converter unit (212), wherein the first converter unit (210) is electrically connected to a load (220) via a first diode element (232) and wherein the second converter unit (212) is electrically connected to the same load (220) via a second diode element (234), the method comprising:
- obtaining first data indicative of an imbalance of one of the first energy storage unit (206) and the second energy storage unit (208) with respect to the respective other one of the first energy storage unit (206) and the second energy storage unit (208),
- providing an operational parameter for at least one of the first converter unit (210) and the second converter unit (212) based on the first data, wherein the operational parameter acts against the imbalance and/or
providing an operational parameter for at least one of the first diode element (232) and the second diode element (234) based on the first data, wherein the operational parameter acts against the imbalance and/or
providing an operational parameter for the load (220) based on the first data, wherein the operational parameter acts against the imbalance.

2. The method of claim 1, wherein the first converter unit (210) is a DC-DC converter unit and/or wherein the second converter unit (212) is a DC-DC converter unit.

3. The method of claim 1 or 2, wherein the first data is indicative of one or more of a state of charge of the first energy storage unit (206), a state of charge of the second energy storage unit (208), a capacity of the first energy storage unit (206), a capacity of the second energy storage unit (208), an output current of the first converter unit (210), an output current of the second converter unit (212), an age of the first energy storage unit (206), an age of the second energy storage unit (208), an internal resistance of the first energy storage unit (206), an internal resistance of the second energy storage unit (208), a cell imbalance of battery cells of the first energy storage unit (206), a cell imbalance of battery cells of the second energy storage unit (208), a wear status of the first energy storage unit (206), a wear status of the second energy storage unit (208), a defect status of the first energy storage unit (206), a defect status of the second energy storage unit (208), heat generated by the first energy storage unit (206), heat generated by the second energy storage unit (208), heat generated by the first converter unit (210), and heat generated by the second converter unit (212).

4. The method of any one of the preceding claims, wherein the operational parameter for the at least one of the first converter unit (210) and the second converter unit (212) comprises an output voltage (211, 213) for the respective converter unit (210, 212).

5. The method of any one of the preceding claims, wherein providing an operational parameter for at least one of the first converter unit (210) and the second converter unit (212) comprises providing a target value for the operational parameter and/or
wherein providing an operational parameter for at least one of the first diode element (232) and the second diode element (234) comprises providing a target value for the operational parameter and/or
wherein providing an operational parameter for the load (220) comprises providing a target value for the operational parameter.

6. The method of any one of the preceding claims, wherein providing an operational parameter comprises continuously modifying the operational parameter and/or selecting a predefined level of the operational parameter.

7. The method of any one of the preceding claims, wherein the operational parameter is closed-loop controlled.

8. A data processing apparatus comprising means for carrying out the method of any one of the preceding claims.

9. A computer program comprising instructions which, when the program is executed by a computer, cause the computer to carry out the method of claims 1 to 7.

10. A computer-readable storage medium comprising instructions which, when executed by a computer, cause the computer to carry out the method of claims 1 to 7.

11. A use of first data indicative of an imbalance of one of a first energy storage unit (206) and a second energy storage unit (208) with respect to a respective other one of the first energy storage unit (206) and the second energy storage unit (208), wherein the first energy storage unit (206) is electrically connected to a first converter unit (210) and the second energy storage unit (208) is electrically connected to a second converter unit (212), wherein the first converter unit (210) is electrically connected to a load (220) via a first diode element (232) and wherein the second converter unit (212) is electrically connected to the same load (220) via a second diode element (234), for
providing an operational parameter for at least one of the first converter unit (210) and the second converter unit (212) and/or
providing an operational parameter for at least one of the first diode element (232) and the second diode element (234) and/or
providing an operational parameter for the load (220).

12. An electric power supply system (200), comprising a first energy storage unit (206), a second energy storage unit (208), a first converter unit (210), a second converter unit (212), a first diode element (232), a second diode element (234), a load (220), and a data processing apparatus according to claim 8,
wherein the first energy storage unit (206) is electrically connected to the first converter unit (210) and the second energy storage unit (208) is electrically connected to the second converter unit (212),
wherein the first converter unit (210) is electrically connected to the load (220) via the first diode element (232) and the second converter unit (212) is electrically connected to the load (220) via the second diode element (234),
wherein the data processing apparatus is communicatively connected to at least one of the first converter unit (210), the second converter unit (212), the first diode element (232), the second diode element (234), and the load (220).

13. The electric power supply system (200) of claim 12, wherein the first converter unit (210) is a DC-DC converter unit and/or wherein the second converter unit (212) is a DC-DC converter unit.

14. The electric power supply system (200) of claim 12 or 13, wherein the first energy storage unit (206) and the second energy storage unit (208) are traction batteries for a vehicle.

15. A vehicle comprising an electric power supply system (200) of any one of claims 12 to 14.
